# FASCICULE DE BREVET EUROPEEN

(11) **EP 4 359 648 B1**
(45) Date de publication et mention de la délivrance du brevet: **04.12.2024**
(21) Numéro de dépôt: 22744250.6
(22) Date de dépôt: 16.06.2022
(51) Int. Cl.: F01D 5/02, F01D 5/28, F04D 29/66, G01M 1/34, F04D 29/32, F04D 29/02

(54) **PROCÉDÉ D'ÉQUILIBRAGE D'AUBES DE SOUFFLANTE AVEC USINAGE DU BORD DE FUITE**
VERFAHREN ZUM AUSWUCHTEN VON BLÄSERSCHAUFELN MIT BEARBEITUNG DER HINTERKANTE
METHOD OF BALANCING FAN BLADES WITH TRAILING EDGE MACHINING

(30) Priorité: 21.06.2021 FR 2106571
(43) Date de publication de la demande: 01.05.2024
(73) Titulaire: SAFRAN AIRCRAFT ENGINES, 75015 Paris (FR)
(72) Inventeur: POULET, Pierre-Alexis, 77550 MOISSY-CRAMAYEL (FR); MOUNIEN, Richard, 77550 MOISSY-CRAMAYEL (FR); LAUWICK, Lucas Antoine Christophe, 77550 MOISSY-CRAMAYEL (FR)
(74) Mandataire: Gevers & Orès
(86) Numéro de dépôt international: PCT/FR2022/051175
(87) Numéro de publication internationale: WO 2022/269173

(56) Documents cités:
- EP-A1- 1 467 063
- EP-A1- 3 663 516
- EP-A2- 1 884 624
- EP-A2- 3 667 021
- DE-A1- 102007 045 300
- GB-A- 2 224 784

## Description

### Domaine de l'invention

La présente invention concerne le domaine de fabrication des aubes de soufflante de turbomachine, en particulier un procédé de fabrication d'une aube de soufflante d'une turbomachine et un procédé d'assemblage d'une soufflante de turbomachine d'aéronef.

### Etat de la technique

L'état de la technique est illustré par les documents GB-A-2 224 784, EP-A2-1 884 624, EP-A1-3 663 516, DE-A1-10 2007 045 300.

De manière classique et connue en soi, une soufflante de turbomachine présente un disque central tournant autour d'un axe de rotation passant sensiblement en son centre. Une pluralité d'aubes sont montées sur le disque central, de manière également réparties autour de sa circonférence. Pour ce faire, le disque central présente, à sa périphérie, une série d'alvéoles et chaque aube comprend un pied correspondant. Ainsi, chaque aube peut être emmanchée dans l'alvéole correspondante du disque central et être retenue à la périphérie de celui-ci selon des mécanismes connus de l'état de la technique.

Chaque aube comprend une pale présentant un bord d'attaque, un bord de fuite, un intrados et un extrados. La pale est typiquement réalisée en matériau composite. Pour protéger le bord d'attaque, il est connu d'agencer un bouclier métallique sur le bord d'attaque.

Chaque aube est montée sur le disque central en fonction de son inertie propre et son inertie relative par rapport aux aubes voisines. Ce montage méticuleux est classiquement dénommé « équilibrage ».

Classiquement, pour l'équilibrage de la soufflante, on utilise deux notions principales : la masse (« weight » en anglais) et le « poids moment radial » (« radial moment weight » (RMW) en anglais) de chaque aube.

L'équilibrage d'un rotor est primordial pour éviter que la rotation n'induise un effort perpendiculaire à l'axe de rotation et n'use prématurément le rotor, pour un meilleur rendement et une performance optimale.

La mesure de la masse consiste simplement à mesurer la masse de chaque aube, de manière à pouvoir les ajuster sur le disque central pour que d'une part, les charges autour du disque soient équilibrées et d'autre part, minimiser les balourds potentiels. Toutefois, cet ajustement des aubes deux à deux n'est pas suffisant. Ou plutôt, il est suffisant si le centre de gravité de chaque aube est situé à égale distance du centre du disque central. Pour équilibrer le rotor, il faut équilibrer les forces générées par les aubes relativement à l'axe de rotation du disque. La force engendrée par une aube est appelée « poids moment radial » de l'aube. Le poids moment radial d'une aube est égal à la masse de l'aube multipliée par la distance entre le centre de gravité de l'aube et l'axe de rotation du disque. Lorsque le poids moment radial de chaque aube est égal à celui des autres, alors le rotor est parfaitement équilibré. Comme chaque personne du métier le sait, la durée de vie d'un rotor dépend en partie de son équilibrage : plus le rotor est équilibré, moins il s'use vite.

Ainsi, de manière bien connue en soi, le poids moment radial des aubes est un paramètre critique dans les problématiques liées à la durée de vie du rotor. Il s'agit donc d'homogénéiser du mieux possible le poids moment radial des aubes afin d'en limiter la dispersion au maximum.

Les procédés de fabrication actuels des aubes comprennent une étape d'appairage puis de collage du bouclier métallique sur le bord d'attaque. On appelle appairage, l'association de l'aube et du bouclier métallique. Puis, l'extrémité libre de l'aube est usinée. L'aube est ensuite finalisée (ajout de peinture, etc...). On mesure alors le poids moment radial de chaque aube.

La soufflante est ensuite assemblée. A cet effet, les aubes sont montées sur le disque central. Afin d'optimiser l'équilibrage de la soufflante, le procédé d'assemblage comprend une étape préalable de détermination de la meilleure répartition des aubes sur le disque de soufflante. La réparation optimale des aubes sur le disque est déterminée grâce à un outil algorithmique qui permet de sélectionner les aubes et calculer leur meilleure répartition sur la soufflante complète, sur la base de différents critères et paramètres tels que le poids moment radial, axial et tangentiel ou encore les propriétés acoustiques, à partir d'une liste de pièces produites et mesurées non encore associées à un disque. Les aubes ne sont donc pas retravaillées après mesure de leurs poids moment radial et l'équilibrage est réalisé sur la base d'une répartition optimale déterminée par le calcul. Cette méthode présente des inconvénients. Il a été constaté que, compte tenu de la dispersion du poids moment radial des aubes, la soufflante n'est pas parfaitement équilibrée malgré la répartition optimisée des aubes sur le disque. Par conséquent, aujourd'hui, pour pallier cette dispersion, il est nécessaire d'ajouter des masselottes d'équilibrage telles que des rivets, a posteriori, dans le cône du module de soufflante au moment du montage de la soufflante sur la turbomachine. Cette solution permet d'ajuster le poids moment radial sur le jeu d'aubes complet de la soufflante mais aucune solution n'existe actuellement pour ajuster ce paramètre sur chaque aube prise individuellement.

Il y a donc un fort intérêt à diminuer la dispersion du poids moment radial pour l'ensemble des aubes.

En moyenne, on se rend compte empiriquement que pour améliorer la capabilité en poids moment radial de l'ensemble des aubes, il serait nécessaire de pouvoir bénéficier d'une marge de 15 g au total sur la masse de chacune des aubes.

Le document GB-A-2 224 784 décrit un procédé de fabrication d'une aube de soufflante d'une turbomachine d'aéronef s'étendant autour d'un axe longitudinal, l'aube comprenant une pale en matériau composite présentant un bord d'attaque et un bord de fuite reliés par une face intrados et une face extrados, la pale s'étendant entre un pied et une extrémité libre, le procédé comportant, chacune des étapes suivantes :
- l'appairage et la fixation d'un bouclier sur le bord d'attaque,
- une première mesure d'un poids moment radial de l'aube.

### Objectif de l'invention

La présente invention a notamment pour objectif d'améliorer l'équilibrage et la durée de vie d'une soufflante de turbomachine en permettant à la fois un ajustement de la masse de chaque aube de la soufflante et une amélioration de la capabilité en poids moment radial de l'ensemble des aubes.

### Exposé de l'invention

On parvient à réaliser cet objectif, conformément à l'invention grâce à un procédé de fabrication d'une aube de soufflante d'une turbomachine d'aéronef s'étendant autour d'un axe longitudinal, l'aube comprenant une pale en matériau composite présentant un bord d'attaque et un bord de fuite reliés par une face intrados et une face extrados, la pale s'étendant entre un pied et une extrémité libre. Selon l'invention, le procédé comporte chacune des étapes suivantes :
- l'appairage et le collage d'un bouclier métallique sur le bord d'attaque,
- une première mesure d'un poids moment radial de l'aube avant ou après le collage du bouclier métallique et la détermination d'un trait de coupe d'usinage,
- l'usinage de l'extrémité libre et/ou du bord de fuite le long du trait de coupe d'usinage de manière à ajuster la masse et le poids moment radial de l'aube,
- une deuxième mesure du poids moment radial de l'aube.
Les étapes d'appairage et de collage du bouclier métallique, d'usinage et de deuxième mesure du poids moment radial de l'aube sont réalisés chronologiquement dans l'ordre d'énonciation. Avantageusement, les étapes d'appairage et de collage du bouclier métallique, de première mesure du poids moment radial de l'aube et la détermination d'un trait de coupe d'usinage, d'usinage et de deuxième mesure du poids moment radial de l'aube sont réalisés chronologiquement dans l'ordre d'énonciation.

Ainsi, cette solution permet d'atteindre l'objectif susmentionné. En particulier, on évite un éparpillement des poids moments radiaux des aubes par une solution d'anticipation. On ajuste à la fois la masse de chaque aube et son poids moment radial, en fin de gamme de fabrication. Ceci permet d'obtenir une meilleure capabilité du poids moment radial c'est-à-dire un ajustement du poids moment radial de chaque aube par rapport à celui des autres aubes. On permet ainsi un recentrage de la soufflante autour de l'axe longitudinal. Le poids moment radial des aubes étant ajusté, on peut s'affranchir de l'étape ultérieure d'équilibrage de la soufflante par l'utilisation des masselottes. L'équilibrage de la soufflante est optimisé et sa durée de vie est améliorée.

Le procédé selon l'invention peut comprendre une ou plusieurs des caractéristiques suivantes, prises isolément les unes des autres ou en combinaison les unes avec les autres :
- le trait de coupe d'usinage est déterminé par estimation d'un poids moment radial cible après usinage, à partir de la première mesure du poids moment radial ;
- le trait de coupe d'usinage délimite une masse sacrificielle comprise entre 5 g et 20 g, de préférence 10 g ;
- le trait de coupe d'usinage est déterminé en fonction d'une tolérance prédéfinie de dimensionnements de l'aube ;
- les dimensionnements s'appliquent à la longueur de la corde de l'aube ;
- les dimensionnements s'appliquent à la masse de l'aube ;
- la longueur de la corde de l'aube peut être diminuée d'une longueur comprise entre 3 mm et 4 mm.

L'invention concerne également un procédé d'assemblage d'une soufflante de turbomachine d'aéronef comprenant une étape de montage d'aubes sur un disque central, chaque aube étant fabriquée selon le procédé ci-dessus.

### Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés. Sur ces dessins :
- la figure 1 est une vue schématique en coupe longitudinale d'une turbomachine double flux,
- la figure 2 est une vue schématique en coupe transversale d'une aube de soufflante,
- la figure 3 est une vue en perspective d'une aube de soufflante.

### Description de modes de réalisation de l'invention

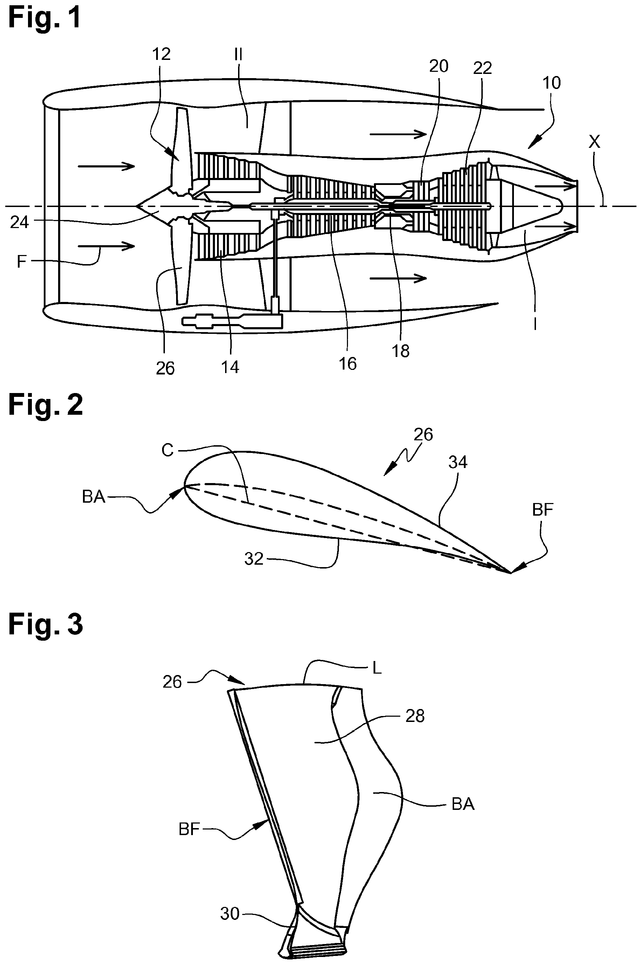

On a représenté à la figure 1, une turbomachine 10 d'aéronef, qui est ici un turboréacteur à double flux et à double corps. La turbomachine 10 s'étend autour d'un axe longitudinal X. Le flux de gaz F s'écoule sensiblement parallèlement à l'axe longitudinal X. De manière connue, la turbomachine 10 comporte, d'amont en aval selon le sens d'écoulement des flux de gaz F, une soufflante 12, un compresseur basse-pression 14, un compresseur haute-pression 16, une chambre annulaire de combustion 18, une turbine haute-pression 20 et une turbine basse-pression 22.

Les rotors du compresseur haute-pression 16 et de la turbine haute-pression 20 sont reliés par un arbre haute-pression (HP) et forment avec lui un corps haute-pression. Les rotors du compresseur basse-pression 14 et de la turbine basse-pression 22 sont reliés par un arbre basse-pression (BP) et forment avec lui un corps basse-pression. Les arbres HP et BP s'étendent suivant l'axe longitudinal X.

La turbomachine 10 comprend également un carter de soufflante qui s'étend autour de celle-ci et qui définit une veine d'entrée d'air des flux F. Une partie de cet air pénètre dans une veine annulaire interne I d'écoulement d'un flux primaire et l'autre partie alimente une veine annulaire externe II d'écoulement d'un flux secondaire. La veine I traverse les corps haute pression et basse pression ainsi que la chambre de combustion 18. La veine externe Il enveloppe des carters des compresseurs et des turbines et rejoint la veine interne I dans une tuyère (non représentée) de la turbomachine 10.

La soufflante 12 comprend un disque central 24 (aussi appelé moyeu) et une rangée annulaire d'aubes 26 portée par ledit disque central 24. Le disque central 24 est par exemple centré sur l'axe longitudinal X. Le disque central 24 est mobile en rotation autour de l'axe longitudinal X. Le disque central 24 est relié à un arbre de soufflante. L'arbre de soufflante est par exemple solidaire en rotation de l'arbre basse pression. L'arbre de soufflante est par exemple relié à l'arbre basse pression par l'intermédiaire d'un réducteur de vitesse (non représenté). Ainsi, la soufflante 12, et notamment lorsqu'elle est de très grande dimension, est mue à une vitesse de rotation inférieure à celle de l'arbre BP, afin de mieux l'adapter aux conditions de vol de l'aéronef.

Comme visible sur la figure 3, l'aube 26 comprend une pale 28 s'étendant entre une extrémité libre L et un pied 30 de l'aube 26. Ce pied 30 est destiné à être emmanché dans une alvéole correspondante (non représentée) du disque central 24 de la soufflante 12. Lorsque l'aube 26 est emmanchée sur le disque 24, la pale 28 s'étend donc radialement par rapport à l'axe longitudinal X, entre l'extrémité libre L et le pied 30. Cet emmanchement se déroule selon un mécanisme bien connu de l'état de la technique.

La pale 28 présente un bord d'attaque, un bord de fuite BF, un intrados 32 et un extrados 34. La face intrados 32 et la face extrados 34 relient le bord d'attaque au bord de fuite BF. La pale 28 présente par ailleurs une corde C de profil. La corde C relie le bord d'attaque au bord de fuite BF. La pale 28 est en matériau composite. Le matériau composite est par exemple un matériau composite à matrice organique. Le matériau composite comprend par exemple une matrice polymérique et des fibres noyées dans la matrice.

L'aube 26 comprend en outre un bouclier métallique BA agencé sur le bord d'attaque. Le bouclier métallique BA est par exemple en titane. Il présente par exemple une forme de dièdre. Il s'étend entre le pied 30 et l'extrémité libre L de l'aube 26. Le bouclier comprend une première ailette latérale s'étendant en partie sur la face intrados 32 et une deuxième ailette latérale s'étendant en partie sur la face extrados 34. Avantageusement, et selon la conception aérodynamique de l'aube 26, la distance du bord d'attaque au bord de fuite BF est plus grande du côté de la face extrados 34 que de la face intrados 32. Ainsi, les flux de gaz F passant du côté de la face extrados 34 ont une plus grande distance à parcourir que ceux passant du côté de la face intrados 32, ils ont comparativement une plus grande vitesse d'écoulement. Ainsi, sur la face extrados 34, les gaz exercent sur l'aube 26 une pression plus faible que celle exercée sur la face intrados 32.

L'aube 26 présente un centre de gravité propre et donc un poids moment radial (RMW pour « Radial Moment Weight » en langue anglaise) propre. Ce poids moment radial est ajusté selon l'invention à la fois en modifiant la masse et la forme de l'aube 26.

L'aube 26 peut être usinée avant emmanchement dans le disque central 24. La pièce métallique ne peut pas aisément être modifiée post appairage.

Afin d'optimiser l'équilibrage de la soufflante 12, il est souhaitable d'homogénéiser au maximum le poids moment radial de chaque aube 26. Selon la présente invention, cette homogénéisation se fait en usine, durant le procédé de fabrication de l'aube 26. L'homogénéisation du poids moment radial de l'aube 26 est réalisée après l'appairage et collage du bouclier métallique BA sur chacune des aubes 26. Le procédé de fabrication selon l'invention comprend ainsi quatre étapes réalisées chronologiquement dans l'ordre d'énonciation sauf mention contraire pour une ou plusieurs étapes:
- l'appairage et le collage du bouclier métallique BA sur l'aube 26,
- une première mesure du poids moment radial de l'aube 26 permettant d'obtenir un poids moment radial réel et la détermination d'un trait de coupe d'usinage,
- l'usinage de l'extrémité libre L et du bord de fuite BF de chaque aube le long du trait de coupe déterminé,
- une deuxième mesure de poids moment radial.
La première mesure est effectuée avant ou après l'appairage et le collage du bouclier métallique BA.

L'usinage se fait de manière à ajuster la masse et le poids moment radial de chaque aube 26 à un poids moment radial cible et permet ainsi d'optimiser le centrage de la soufflante 12 sur la turbomachine 10.

Le poids moment radial cible se détermine empiriquement, en usine. Le poids moment radial cible est situé entre une valeur minimale et une valeur maximale déterminées par l'homme du métier lors de la conception de l'aube 26. Une fois le poids moment radial cible déterminé, on peut le comparer au poids moment radial réel de l'aube 26 déterminé lors de la première mesure et déterminer le trait de coupe d'usinage. On en déduit alors une masse sacrificielle à retirer. Plus précisément, le trait de coupe d'usinage est déterminé, pour chaque aube 26, en combinant la première mesure du poids moment radial et des tables d'abaques. Les tables d'abaques sont par exemple automatisés sous la forme d'un algorithme prenant en compte comme données d'entrée la première mesure du poids moment radial. L'algorithme est avantageusement alimenté par les valeurs de masses des aubes et par les résultats des découpes d'usinage sur les aubes précédentes.

Le trait de coupe d'usinage est donc obtenu en déterminant à la fois la masse sacrificielle à retirer et l'endroit d'où il convient de la retirer. Cette masse sacrificielle (délimitée par le trait de coupe d'usinage) est comprise entre 5 g et 20 g, de préférence 10 g.

L'usinage et le poids moment radial sont utilisés de deux façons alternatives dans le procédé de la présente invention :
- soit on mesure le poids moment radial de l'aube 26 avant le collage du bouclier métallique BA, puis on colle le bouclier métallique BA et on retire la masse en surplus par rapport au poids moment radial cible,
- soit on mesure le poids moment radial après le collage du bouclier métallique BA et on retire la masse sacrificielle.

La solution proposée consiste ainsi à usiner le bord de fuite BF et/ou l'extrémité libre L après l'appairage et collage du bouclier métallique BA. L'usinage est ainsi réalisé sur le matériau composite. Toutefois, il n'est pas toujours possible de suivre exactement le trait de coupe : en effet, même après usinage, l'aube 26 doit présenter un dimensionnement conforme à des normes et des spécifications préétablies. Ces dimensionnements s'appliquent à la longueur de la corde C de chaque aube 26 et/ou à la masse de celle-ci.

L'usinage de l'aube 26 peut être fait avec un décalage plus ou moins important en amont ou aval du trait de coupe, de manière à assurer une longueur de corde C et un poids moment radial dans les tolérances de dimensionnement définies tout en respectant la marge de tolérance du poids moment radial. En effet, il convient d'homogénéiser les poids moments radiaux des aubes 26 sans nuire à la qualité de la soufflante 12. Ainsi, si malgré cette marge de tolérance, la masse sacrificielle à retirer est trop importante et que les dimensionnements de l'aube 26 post usinage ne satisfont plus aux tolérances de dimensionnement définies, cette aube 26 est mise au rebut.

A titre d'exemple, sur la turbomachine LEAP-1A, il est possible de calculer tout en restant dans les tolérances de dimensionnement et dans la marge de tolérance du poids moment radial la masse sacrificielle qu'il est possible d'usiner pour obtenir le poids moment radial cible.

Dans l'exemple considéré, la surface du bord de fuite calculée est de 1994mm². Les tolérances de dimensionnement sur la ligne de corde C sont comprises entre 3 mm et 4 mm. Ainsi 3 mm à 4mm peuvent être usinés tout en permettant à l'aube 26 de rester dans les tolérances de dimensionnement préalablement définies.

On en déduit ainsi la masse sacrificielle disponible sur le bord de fuite BF. Pour rappel, la masse volumique d'un matériau composite est classiquement de 0.00155 g/mm3. Avec entre 3 mm et 4mm de marge en bord de fuite BF, la masse qu'il est possible d'usiner (ou de conserver) est évaluée à une dizaine de grammes.

Il a été déterminé empiriquement par la Déposante qu'une dizaine de grammes représente une masse cible et significative vis-à-vis du poids moment radial.

Plus une aube 26 en composite présente une dimension importante, ou plus les tolérances sur la longueur de corde C sont importantes et plus la masse sacrificielle peut être considérable car elle permet de modifier le poids moment radial dans une plage plus conséquente et permet l'obtention d'un poids moment radial cible dès la production.

La présente invention permet donc de corriger la masse de l'aube 26 pour être, après usinage, comprise dans la marge de tolérance de poids moment radial définie. Ainsi, la capabilité en production sur cette grandeur est optimisée.

En outre, les coûts induits par les non-conformités (traitement de dérogations, retouches éventuelles) sont limités.

De plus, en considérant le vieillissement des aubes 26 dans une turbomachine 10 en fonction, dans des conditions d'utilisation similaires aux turbomachines munies de soufflantes 12 avec des aubes 26 appariées selon l'état de la technique actuel, la chute de poids moment radial lié au vieillissement des aubes 26 de la turbomachine 10 est mieux anticipée.

Et finalement, l'usinage adaptatif permet, par anticipation des contributions des couches protectrices sur le composite et de la peinture sur le poids moment radial final de l'aube 26, d'obtenir un poids moment radial réel sensiblement similaire (à la marge de tolérance de poids moment radial définie, près) au poids moment radial cible.

## Revendications

1. Procédé de fabrication d'une aube (26) de soufflante (12) d'une turbomachine (10) d'aéronef s'étendant autour d'un axe longitudinal (X), l'aube (26) comprenant une pale (28) en matériau composite présentant un bord d'attaque et un bord de fuite (BF) reliés par une face intrados (32) et une face extrados (34), la pale (28) s'étendant entre un pied (30) et une extrémité libre (L), le procédé comportant chacune des étapes suivantes :
- l'appairage et le collage d'un bouclier métallique (BA) sur le bord d'attaque,
- une première mesure d'un poids moment radial de l'aube (26) avant ou après le collage du bouclier métallique (BA) et la détermination d'un trait de coupe d'usinage,
- l'usinage de l'extrémité libre (L) et/ou du bord de fuite (BF) le long du trait de coupe d'usinage de manière à ajuster la masse et le poids moment radial de l'aube (26),
- une deuxième mesure du poids moment radial de l'aube (26).

2. Procédé selon la revendication précédente, **caractérisé en ce que** le trait de coupe d'usinage est déterminé par estimation d'un poids moment radial cible après usinage, à partir de la première mesure du poids moment radial.

3. Procédé selon l'une quelconque des revendications précédentes, **caractérisé en ce que** le trait de coupe d'usinage délimite une masse sacrificielle comprise entre 5 g et 20 g, de préférence 10 g.

4. Procédé selon l'une quelconque des revendications précédentes, **caractérisé en ce que** le trait de coupe d'usinage est déterminé en fonction d'une tolérance prédéfinie de dimensionnements de l'aube (26).

5. Procédé selon la revendication précédente, **caractérisé en ce que** les dimensionnements s'appliquent à la longueur de la corde (C) de l'aube (26).

6. Procédé selon l'une quelconque des revendications 4 ou 5, **caractérisé en ce que** les dimensionnements s'appliquent à la masse de l'aube (26).

7. Procédé selon la revendication 5, **caractérisé en ce que** la longueur de la corde (C) de l'aube (26) peut être diminuée d'une longueur comprise entre 3 mm et 4 mm.

8. Procédé d'assemblage d'une soufflante (12) de turbomachine (10) d'aéronef comprenant une étape de montage d'aubes (26) sur un disque central (24), chaque aube (26) étant fabriquée selon le procédé de l'une quelconque des revendications 1 à 7.

## Patentansprüche

1. Herstellungsverfahren für eine Schaufel (26) eines Gebläses (12) eines Turbotriebwerks (10) eines Luftfahrzeugs, das sich um eine Längsachse (X) herum erstreckt, wobei die Schaufel (26) ein Blatt (28) aus Verbundmaterial umfasst, das eine Anströmkante und eine Abströmkante (BF) aufweist, die durch eine Innenfläche (32) und eine Außenfläche (34) verbunden sind, wobei das Blatt (28) sich zwischen einem Fuß (30) und einem freien Ende (L) erstreckt, wobei das Verfahren jeden der folgenden Schritte beinhaltet:
- das Koppeln und das Kleben eines metallischen Schutzschilds (BA) auf die Anströmkante,
- eine erste Messung eines Radialmomentgewichts der Schaufel (26) vor oder nach dem Kleben des metallischen Schutzschilds (BA) und der Bestimmung einer Bearbeitungsschnittlinie,
- die Bearbeitung des freien Endes (L) und/oder der Abströmkante (BF) entlang der Bearbeitungsschnittlinie auf eine Weise, um die Masse und das Radialmomentgewicht der Schaufel (26) einzustellen,
- eine zweite Messung des Radialmomentgewichts der Schaufel (26).

2. Verfahren nach dem vorstehenden Anspruch, **dadurch gekennzeichnet, dass** die Bearbeitungsschnittlinie durch Schätzung eines Radialmomentgewichts nach der Bearbeitung ausgehend von der ersten Messung des Radialmomentgewichts bestimmt wird.

3. Verfahren nach einem der vorstehenden Ansprüche, **dadurch gekennzeichnet, dass** die Bearbeitungsschnittlinie eine Opfermasse zwischen 5 g und 20 g, vorzugsweise 10 g abgrenzt.

4. Verfahren nach einem der vorstehenden Ansprüche, **dadurch gekennzeichnet, dass** die Bearbeitungsschnittlinie als Funktion einer vorbestimmten Toleranz der Dimensionierungen der Schaufel (26) bestimmt wird.

5. Verfahren nach dem vorstehenden Anspruch, **dadurch gekennzeichnet, dass** die Dimensionierungen für die Länge der Sehne (C) der Schaufel (26) gelten.

6. Verfahren nach einem der vorstehenden Ansprüche 4 oder 5, **dadurch gekennzeichnet, dass** die Dimensionierungen für die Masse der Schaufel (26) gelten.

7. Verfahren nach Anspruch 5, **dadurch gekennzeichnet, dass** die Länge der Sehne (C) der Schaufel (26) um eine Länge zwischen 3 mm und 4 mm verringert werden kann.

8. Verfahren zum Zusammenbau eines Gebläses (12) eines Turbotriebwerks (10) eines Luftfahrzeugs, umfassend einen Schritt der Montage der Schaufeln (26) auf eine zentrale Scheibe (24), wobei jede Schaufel (26) gemäß dem Verfahren eines der Ansprüche 1 bis 7 hergestellt wird.

## Claims

1. A method for manufacturing a vane (26) for a fan (12) of an aircraft turbomachine (10) extending about a longitudinal axis (X), the vane (26) comprising a blade (28) made of a composite material having a leading edge and a trailing edge (BF) connected by a pressure side (32) and a suction side (34), the blade (28) extending between a root (30) and a free end (L), the method comprising each of the following steps:
- pairing and bonding a metal shield (BA) to the leading edge,
- a first measurement of a radial moment weight of the vane (26) before or after bonding the metal shield (BA) and determining a machining kerf,
- machining the free end (L) and/or the trailing edge (BF) along the machining kerf so as to adjust the mass and the radial moment weight of the vane (26),
- a second measurement of the radial moment weight of the vane (26).

2. The method according to the preceding claim, **characterised in that** the machining kerf is determined by estimating a target radial moment weight after machining, from the first measurement of the radial moment weight.

3. The method according to any one of the preceding claims, **characterised in that** the machining kerf delimits a sacrificial mass of between 5 g and 20 g, preferably 10 g.

4. The method according to any one of the preceding claims, **characterised in that** the machining kerf is determined as a function of a predefined tolerance of the dimensions of the vane (26).

5. The method according to the preceding claim, **characterised in that** the dimensions apply to the length of the chord (C) of the vane (26).

6. The method according to any one of claims 4 or 5, **characterised in that** the dimensions apply to the mass of the vane (26).

7. The method according to claim 5, **characterised in that** the length of the chord (C) of the vane (26) can be reduced by a length of between 3 mm and 4 mm.

8. A method for assembling a fan (12) for an aircraft turbomachine (10), comprising a step of mounting vanes (26) on a central disc (24), each vane (26) being manufactured by the method of any one of claims 1 to 7.
